# EUROPEAN PATENT APPLICATION

(11) **EP 1 389 880 A1**
(43) Date of publication of application: **18.02.2004**
(21) Application number: 02425489.8
(22) Date of filing: 26.07.2002
(51) Int. Cl.: H04Q 7/22, H04Q 7/38

(54) **Method for handling short messages to congested nodes in a cellular telecommunications network**

(71) Applicant: TELEFONAKTIEBOLAGET LM ERICSSON (publ), 126 25 Stockholm (SE)
(72) Inventor: Fiorillo, Lorenzo, 81020 S.Nicola la Strada (CE) (IT); Santoro, Pompeo, 84081 Baronissi (SA) (IT)
(74) Representative: Modiano, Guido, Dr.-Ing.

(57) **Abstract**

A method and means for handling user's messages, that is short messages or multimedia messages, in a cellular telecommunications network. In the case that a control node is congested, further sending of short messages is avoided by an entry into a list of temporarily barred nodes. The congested node sends an indication that it is congested in an uplink direction, thus informing other nodes that short messages shall not be sent at least for a predefined time value.

## Description

### Technical field of the invention

The invention relates to a method and means for handling user's messages like short messages and multimedia messages in a cellular telecommunications network.

In the following the more familiar term short message will be used as a synonym for user's messages.

A specific area of the PLMN (Public Land Mobile Network) can experience very high load due to abnormal events. In such a situation the existing standardized mechanisms used to attempt the delivery of mobile terminating short messages can cause a runaway overload effect that can impede not only successful delivery of said short messages but also the successful set-up of speech calls. This is of course to be avoided by all means since reliable communication is essential in such emergency situations.

An example of a disaster where such runaway overload effect has happened is the explosion in a chemical factory in Toulouse (France) in September 2001. Said explosion destroyed three base transceiver stations and set three base station controller into stoppage. The result in a mobile services switching centre were a central processor load of 90% that reduced slowly during the next 12 hours, a massive number of terminating short message calls during 12 hours and a massive number of rejected paging requests during this period. This caused traffic loss in said mobile services switching centre for about 12 hours.

When an exceptional situation, such as an accident, happens in a service area of a mobile services switching centre, usually there are suddenly a lot more call attempts that are directed to that area. This increased call attempt rate can cause an overload situation in the mobile services switching centre. This effect is increased by the fact that most probably the disaster has also affected the capability of the radio access network, for instance by destroying equipment of the radio access network,

Due to the overload, a number of these terminating calls will fail, and eventually will be redirected to the Voicemail System announcement. The calling party will leave a message and then the Voicemail System will notify, most commonly via mobile terminating short message, the called mobile subscriber that he has got a message waiting for him.

As the mobile services switching centre is already overloaded, the delivery of the mobile terminating short message coming from the Voicemail System will probably fail. The short message service centre will retry over and over to deliver the mobile terminating short message according to its retransmission scheme. This leads to an even higher increase of the mobile services switching centre load. The actual number of retransmission attempts depends on the short message service centre settings. A common retransmission scheme is to resend a short message 3 to 5 times in the first 20 minutes. In some markets these retry schemes are even more aggressive.

### Description of related art

One solution to avoid the sending of mobile terminating short messages is to inactivate the short message service by operator commands. This would also affect the delivery of short messages in serving control nodes that are not suffering from heavy traffic. A serving control node is for example a mobile services switching centres or a serving GPRS (General Packet Radio Service) support node that serves a receiver of a user's message.

Another possibility is to disable the forwarding of short messages in a serving control node. This has the drawback that incoming signalling to the serving control node related to short messages is not suppressed. By this processing power of the serving control node is used unnecessarily for the handling of said signalling.

Therefore it is object of the invention to provide a method and means for the handling of short messages in situations with high traffic load within a serving control node that reduces the traffic load of said mobile services switching centre.

This is solved by the method of claim 1, the mobile services switching centre of claim 9, the GPRS support node of claim 10, the gateway mobile services switching centre of claim 11, and the user's message service centre of claim 12. Further advantageous embodiments can be derived from the dependent claims

### Summary

An emergency situation is any situation that causes a high traffic load for a longer time period in difference to a traffic peak that lasts only for a short time. Such an emergency situation may therefore be a major sports event, an accident, a terrorist attack or any other event causing a high traffic load for a longer time.

The invention introduces a method for handling a user's message in a telecommunications system wherein the following steps are performed a serving control node when executing the method. A congestion of the telecommunications system is determined, a message indicating that a user's message shall be forwarded towards a receiver is received, and a failure message comprising an indication that the user's message could not be forwarded due to the congestion is returned. This has the advantage that an appropriate failure indication is returned to the sender of the message indicating that a user's message shall be forwarded. This enables to take specific actions for a congestion situation in an uplink direction of the network, thus reducing the requested processing capacity in the mobile services switching centre.

In an embodiment of the invented method, in the step of determining a congestion it is determined whether the congestion is based on an emergency situation or not and wherein in the case of an emergency situation in the step of returning the indication states that the congestion is caused by an emergency situation. This enables to distinguish between congestions in general and congestions due to an emergency situation. The advantage is that even more specific actions can be taken, as emergency situations usually cause high traffic load for a longer time than usual traffic peaks.

For the invented method and its embodiment, the following steps can be performed by a gateway mobile services switching centre when executing the method. A message from a user's message service centre, indicating that a user's message shall be forwarded towards a receiver, is received. A message is sent to a serving control node indicating that a user's message shall be sent to a receiver, a failure message is received comprising an indication that the user's message could not be forwarded due to congestion, and a message is sent to the user's message service centre indicating the failure of delivery comprising an indication that the user's message could not be delivered due to congestion. It is advantageous that the indication is forwarded to the gateway mobile services Switching centre, as it is an entry point in a cellular telecommunications system. Thus, the gateway mobile services switching centre is one of the most effective nodes to stop the delivery of mobile terminated short messages in a cellular telecommunications network as it minimises the signalling traffic.

In an embodiment of the invented method, the serving control node performs the additional steps of determining from the received failure message that the congestion is caused by an emergency situation, and inserting the serving control node into a list of temporarily barred nodes at least for a predefined time value. The inserting into the list of temporarily barred nodes has the advantage that a gateway mobile services switching centre can determine that a short message shall not be forwarded before contacting the mobile services switching centre.

A gateway mobile services switching centre can perform the following steps of the invented method. It receives from a user's message service centre an indication that a user's message shall be sent to a receiver, it requests routing information for the delivery of said user's message, it receives an indication that the mobile services switching centre or general packet radio service support node the user's message shall be forwarded to is currently barred, and sends to the user's message service centre a failure message comprising an indication that the user's message could not be delivered due to congestion. A user's message service centre is for example a short message service centre of a service centre for delivering multimedia messages. The determining that a user's message shall not be forwarded in the gateway mobile services switching centre reduces signalling effort in the telecommunications system in general and in an overloaded mobile services switching centre or GPRS support node in particular.

In an embodiment of the invented method, a user's message service centre performs the following steps. It sends to a gateway mobile services switching centre an indication that a user's message is to be sent to a receiver, it receives a message comprising an indication that the user's message could not be delivered due to congestion, and it skips any attempts to resend the user's message at least for a predefined time value. This reduces signalling effort wilhin the cellular telecommunications network,

In any of the described embodiments, a user's message can be a short message or a multimedia message.

The invention further introduces a mobile services switching centre and a GPRS support node with means for detecting a congestion, means for handling a user's message, and a failure message delivery unit that is adapted to sending a message to a gateway mobile services switching centre wherein the message comprises an indication that a user's message could not be delivered due to congestion.

Also introduced is a gateway mobile services switching centre comprising means for handling a user's message that it is adapted to receive an indication that a mobile services switching centre a user's message shall be forwarded to is beared, to receive a message indicating that a user's message could not be delivered due to congestion, and to send a failure message to a user's message service centre comprising an indication that the message could not be delivered due to congestion.

A user's message service centre according to the invention is adapted to skip all retries to send a user's message after receiving a message indicating that a user's message could not be delivered due to congestion.

### Brief description of the figures

Figure 1 depicts a signal flow according to the invented method,
Figure 2 depicts a further signal flow according to the invention,

### Detailed description of the invention

In the following the invention will be described by means of figures and embodiments.

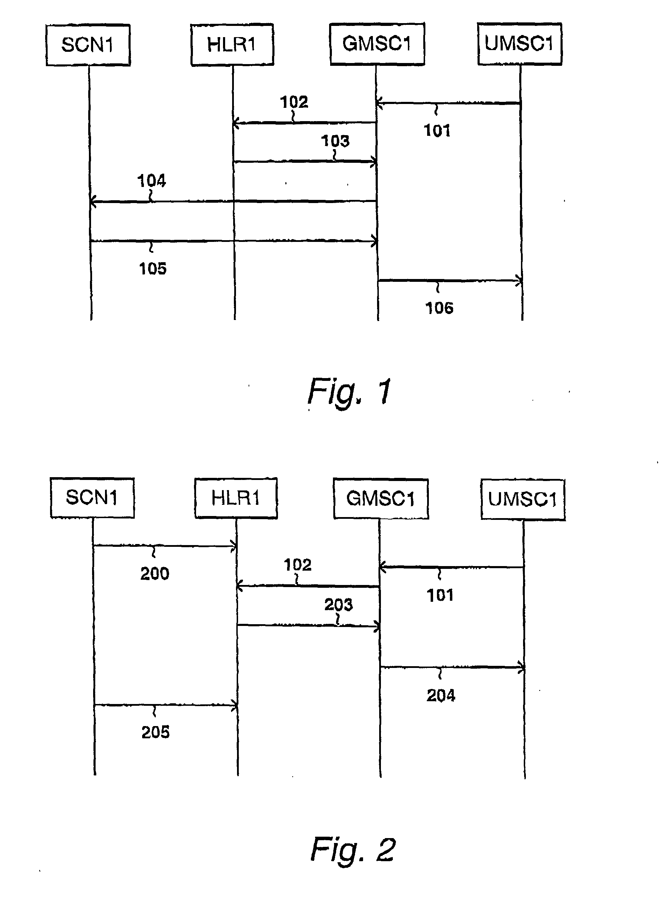

Figure 1 depicts a signal flow according to the invention. The signals are sent between a serving control node SCN1, a home location register HLR1, a gateway mobile services switching centre GMSC1, and a user's message service centre UMSC1.

In a first step 101 the user's messages service centre UMSC1 sends a message indicating that a user's message shall be forwarded towards a receiver to the gateway mobile services switching centre GMSC1. Said message can be the user's message itself comprising an identification of its receiver. The gateway mobile services switching centre GMSC1 interprets the message, identifies the intended receiver and requests in a next step 102 routing information from the home location register HLR1, for example by sending a MAP (Mobile Application Part) MAP_SEND_ROUTING_INFO_FOR_SM message- Instead of the home location register any other entity adapted to provide routing information can be contacted in this step as for example a AAA (Authentication, Authorisation, Accounting) server or a home subscriber server. The home location register HLR1 determines the requested information and returns it to the gateway mobile services switching centre GMSC1 in a next step 103, for example by sending a MAP MAP_SEND_ROUTING_INFO_FOR_SM_ACK message The mobile services switching centre MSC1 receives the requested routing information including an identification of the serving control node SCN1. In a next step 104 the gateway mobile services switching centre GMSC1 sends a message, for instance a MAP MAP_MT_FORWARD_SHORT_MESSAGE message, to the serving control node SCN1, indicating that a user's massage shall be sent to a receiver. During the attempt to deliver the message or before reception of the message, the serving control node SCN1 determines congestion. It returns a failure message in a next step 105, e.g. a MAP MAP_MT_FORWAKD_SHORT_MESSAGE_ACK message, to the gateway mobile services switching centre OMSC1, The failure message comprises an indication that the user's message could not be delivered due to congestion.

In a preferred embodiment or the invention, the failure message can indicate that the congestion is caused by an emergency situation. This can be implemented by adding two new error codes into a list of error codes that can be returned to a gateway mobile services switching centre. One of the new error codes indicating congestion the other one indicating a congestion caused by an emergency situation. The codes may be named "Serving Node Congestion" and "Serving Node Catastrophic Congestion". In the preferred embodiment, the serving control node SCN1 inserts itself into a list of temporarily barred nodes, depicted in figure 2 as step 200. It may start a timer with a predefined timer value. When the timer value expires, the serving control node SCN1 checks whether the congestion still exists and if not, it removes itself from the list, in figure 2 depicted as step 205. In an alternative embodiment of the invention, the serving control node SCN1 removes itself from the list at the expiration of the timer value. In an embodiment of the invention, the fast is stored at a home location register. In a further embodiment of the invention, the serving control node may be added to and removed from said list by a gateway mobile services switching centre. A congestion due to an emergency situation may be determined by the serving control node by means of the duration of the congestion. If the congestion lasts for longer than a predefined time value, it is determined as being caused by an emergency situation. Another way is to compare with predefined overload threshold values, given for example by an operator or vendor of a node.

In a next step 106 the gateway mobile services switching centre GMSC1 sends to the user's message service centre a failure message comprising an indication that the user's message could not be delivered due to congestion. In a preferred embodiment of the invention, the failure message can indicate that the congestion is caused by an emergency situation.

The user's message service centre receives the failure message, interprets it and skips any attempts to resend the message.

Figure 2 depicts a further signal flow according to the invention. Depicted are the same nodes as in figure 1. In a first step 200, the serving control node SCN1 inserts itself into a list of temporarily barred nodes stored at the home location register HLR1. The steps 101 and 102 are the same as described in figure 1. In step 203 the home location register HLR1 sends a message indicating that the serving node SCN1 is currently barred. The gateway mobile services switching centre GMSC1 receives said message and sends in a next step 204 a failure message to the user's message service centre UMSC1 indicating that the user's message could not be delivered due to congestion. The user's message service centre UMSC1 receives the message and skips any attempt to resend the message, at least for a predefined time value.

It should be noted that the gateway mobile services switching centre and the mobile services switching centre can be the same node. If necessary, a connection between the user's messages service centre and the serving control node can be established. Each predefined time value may be set by an operator or a vendor of the respective node.

## Claims

1. Method for handling a user's message in a telecommunications system wherein the following steps are performed by a serving control node when executing the method:
- determining a congestion of the telecommunications system,
- receiving a message indicating that a user's message shall be forwarded towards a receiver, and
- returning a failure message comprising an indication that the user's message could not be forwarded due to the congestion.

2. Method according to claim 1, wherein in the step of determining a congestion it is determined whether the congestion is based on an emergency situation or not and wherein in the case of an emergency situation in the step of returning the indication states that the congestion is caused by an emergency situation.

3. Method according to claim 1 or 2, wherein the following steps are performed by a gateway mobile services switching centre when executing the method:
- receiving a message from a user's message service centre indicating that a user's message shall be forwarded towards a receiver,
- sending a message to a serving control node indicating that a user's message shall be sent to a receiver,
- receiving a failure message comprising an indication dial the user's message could not be forwarded due to congestion, and
- sending a message to the user's message service centre indicating the failure of delivery comprising an indication that the user's message could not be delivered due to congestion.

4. Method according to claim 3, with the additional steps of:
- determining from the received failure message that the congestion is caused by an emergency situation, and
- inserting the serving control node into a list of temporarily barred nodes at least for a predefined time value.

5. Method according to claim 1 or 2, wherein the following steps are performed by a gateway mobile services switching centre:
- receiving from a user's message service centre an indication that a user's message shall be sent to a receiver,
- requesting routing information for the delivery of said user's message,
- receiving an indication that the serving control node the user's message shall be forwarded to is currently barred, and
- sending to the user's message service centre a failure message comprising an indication that the user's message could not be delivered due to congestion.

6. Method according to any of the preceding claims wherein the following steps are performed by a user's message service centre:
- sending to a gateway mobile services switching centre an indication that a user's message is to be sent to a receiver,
- receiving a message comprising an indication that the user's message could not be delivered due to congestion, and
- skipping any attempts to resend the user's message at least for a predefined time value.

7. Method according to any of the preceding claims wherein a user's message is a short message or a multimedia message.

8. Method according to any of the preceding claims wherein a serving control node is a mobile services switching centre or general packet radio service support node.

9. Mobile services switching centre with means for detecting a congestion, means for handling a user's message, **characterised by** a failure message delivery unit that is adapted to sending a message to a gateway mobile services switching centre wherein the message comprises an indication that a user's message could not be delivered due to congestion.

10. General packcet radio service support node with means for detecting a congestion, means for handling a user's message, **characterised by** a failure message delivery unit that is adapted to sending a message to a gateway mobile services switching centre wherein the message comprises an indication that a user's message could not be delivered due to congestion.

11. Gateway mobile services switching centre comprising means for handling a user's message **characterised by** that it is adapted to receive an indication that a mobile services switching centre or general packet radio service support node a user's message shall be forwarded to is barred, to receive a message indicating that a user's message could not be delivered due to congestion, and to send a failure message to a user's message service centre comprising an indication that the message could not be delivered due to congestion.

12. User's message service centre **characterised by** being adapted to skip all retries to send a user's message after receiving a message indicating that a user's message could not be delivered due to congestion.
